(19)

Europäisches
Patentamt
European
Patent Office
Office européen
des brevets

(11) **EP 2 306 680 A1**

(12) **EUROPEAN PATENT APPLICATION**
published in accordance with Art. 153(4) EPC

(43) Date of publication:
**06.04.2011 Bulletin 2011/14**

(21) Application number: **09771957.9**

(22) Date of filing: **26.06.2009**

(51) Int Cl.:
***H04L 27/26*** *(2006.01)*

(86) International application number:
**PCT/CN2009/072461**

(87) International publication number:
**WO 2010/000187 (07.01.2010 Gazette 2010/01)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **30.06.2008  CN 200810115860**

(71) Applicant: **Beijing Nufront Mobile Multimedia
Tech. Co., Ltd.
Beijing 100084 (CN)**

(72) Inventors:
- **BAO, Dongshan
  Beijing 100084 (CN)**
- **LI, Xuming
  Beijing 100084 (CN)**
- **SI, Hongwei
  Beijing 100084 (CN)**

(74) Representative: **Delumeau, François Guy et al
Cabinet Beau de Loménie
158, rue de l'Université
75340 Paris Cedex 07 (FR)**

(54) **MULTIPLEXING DEVICE AND METHOD FOR ORTHOGONAL FREQUENCY DIVISION MULTIPLEXING SYSTEM**

(57)    A multiplexing device for orthogonal frequency division multiplexing (OFDM) system comprises a first unit (S21) for combining $N$-path differential-modulation symbol sequences and mapping to sub-carriers of inverse fast Fourier transformation, $N$ is an integer which is greater than 1, and a second unit (S22) for executing the IFFT of sub-carriers to realize frequency division multiplexing of multi-path differential-modulation symbol sequences. The multiplexing transmitting device can not only realize multiplexing transmission of multi-path signals in differential OFDM system, but also the device can be very simply realized, the multiplexing method for OFDM system is also disclosed.

Fig.2

**EP 2 306 680 A1**

**Description**

FIELD OF THE INVENTION

The present invention relates to the art of multi-path signals multiplexing transmission, and particularly to a multiplexing device and method for an orthogonal frequency division multiplexing (OFDM) system.

BACKGROUND OF THE INVENTION

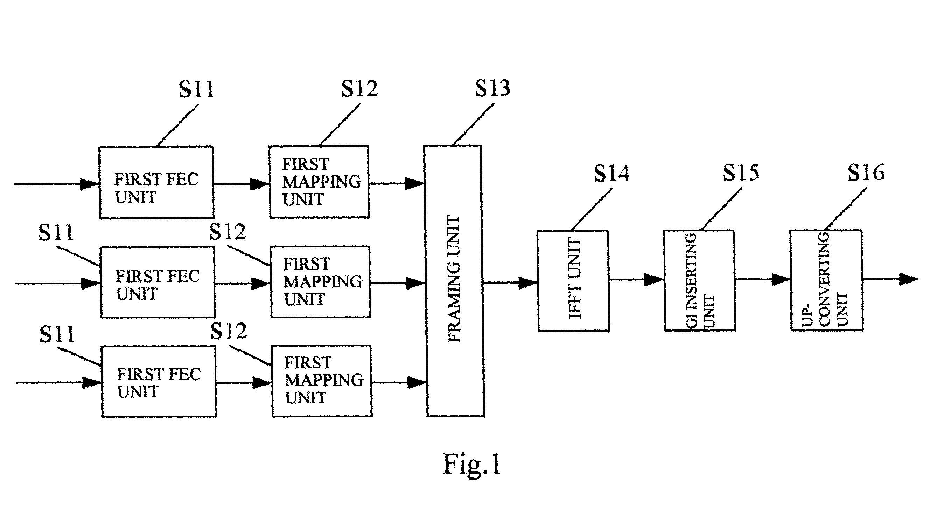

In the art of mobile communication, the OFDM technology has been applied widely. At present, in many occasions, it is required to perform multiplexing transmission on the OFDM symbols. An OFDM transmitting system is shown in Fig. 1. The system comprises: a plurality of forward error correction (FEC) encoding units S11 for performing encoding on a plurality of source data corresponding to a plurality of service modes, so as to correct error codes at the receiver occurred during data transmission, wherein, each FEC encoding unit performs an encoding on the source data corresponding to one of the service modes; a plurality of mapping units S12 connected with the plurality of FEC encoding units S11 correspondingly, each of which maps the corresponding encoded source data into code elements; a framing unit S13 for combining the code elements mapped by the plurality of mapping units S12 into a plurality of OFDM frames, dividing the plurality of OFDM frames into a predetermined number of frame groups, and inserting a header in each of the frame groups, wherein the header contains the information on each source data in the plurality of service modes comprised in the grouped OFDM frames; an Inverse Fast Fourier Transforming (IFFT) unit S14 for performing the IFFT of multiple sub-carriers on the OFDM frames, to modulate the OFDM frames into OFDM code elements; a guard interval (GI) inserting unit S15 for inserting GIs for interference suppression among the OFDM code elements; and a RF up-converting unit S16 for up-converting the OFDM code elements among which GIs have been inserted into RF signals.

When two paths of signals in this system are frequency division multiplexed, it is required to reserve a protection frequency band of 176 kHz or more. Therefore, only four paths of signals can be transmitted in a frequency band of 8 MHz, and thus the utilization ratio of the frequency spectrum is relatively low.

Combining with the current technical concept of OFDM, an OFDM technology is proposed in the present invention.

SUMMARY OF THE INVENTION

In view of the above, the technical problem to be solved by the present invention is to provide a multiplexing device for an OFDM system.

In some embodiments, the multiplexing transmitting device comprises a first unit for combining and mapping $N$-path differential-modulation symbol sequences to sub-carriers of IFFT; and a second unit for performing IFFT of multiple sub-carriers to realize frequency division multiplexing on multiple paths of differential-modulation symbol sequences. The multiplexing transmitting device can not only realize multiplexing transmission of multi-path signals in a differential OFDM system, but also is very simple to realize.

In some embodiments, the first unit combines and maps $N$-path differential-modulation symbol sequences to sub-carriers of IFFT in the following manner:

$$z_{m,l,w} = \begin{cases} z_{m,l,k}^{i}, & w = [i-(N-1)/2] \cdot \Delta f \cdot T_u + k; i = 0,1,\ldots,N-1; k = -K/2, -K/2+1,\ldots,K/2-1, K/2 \\ 0, & other \quad n \end{cases}$$

wherein $z_{m,l,w}$ indicates phase-compensated differential modulation symbols transmitted over the $w^{th}$ sub-carrier of the $l^{th}$ OFDM symbol in the $m^{th}$ transmission frame; $z_{m,l,k}^{i}$ indicates differential modulation symbols transmitted over the $k^{th}$ sub-carrier of the $l^{th}$ OFDM symbol in the $m^{th}$ transmission frame of the $i^{th}$ path differential-modulation symbols sequences indicates the number of OFDM valid sub-carriers corresponding to each path of symbol sequences, $\Delta f$ is a central frequency interval between the sub-carriers corresponding to two neighboring paths of differential modulation symbols, and $T_u$ is a reciprocal of the sub-carrier interval.

$\Delta f$ is set in a way that all transmission sub-carriers can remain orthogonal.

In some embodiments, $\Delta f = B + \Delta s \times n$; wherein $B$ is an effective bandwidth occupied by the differential-modulation symbol sequences, $\Delta s$ indicates a frequency interval between two neighboring sub-carriers, and n = 1, 2, 3....

In some embodiments, the frequency interval. $\Delta s$ between two neighboring sub-carriers is 8 kHz, and n = 1.

As can be seen, when $\Delta s$ = 8 MHz and n = 1, more paths of data can be transmitted within a limited bandwidth, for example 8 MHz, and thus the utilization ratio of the frequency spectrum is greatly improved.

Another technical problem to be solved by the present invention is to provide a multiplexing method for an OFDM system.

In some embodiments, the method comprises the steps of: combining and mapping $N$-path differential-modulation symbol sequences to sub-carriers of IFFT; performing IFFT of multiple sub-carriers to realize frequency division multiplexing on multiple paths of differential-modulation symbol sequences.

In some embodiments, $N$-path differential-modulation symbol sequences are combined and mapped to sub-carriers of IFFT. in the following manner:

$$z_{m,l,w} = \begin{cases} z^i_{m,l,k}, & w = \left[i-(N-1)/2\right]\cdot\Delta f\cdot T_u + k; i = 0,1,\ldots,N-1; k = -K/2, -K/2+1,\ldots,K/2-1,K/2 \\ 0, & other \qquad n \end{cases}$$

wherein $z_{m,l,w}$ indicates phase-compensated differential modulation symbols transmitted over the $w^{th}$ sub-carrier of the $l^{th}$ OFDM symbol in the $m^{th}$ transmission frame; $z^i_{m,l,k}$ indicates differential modulation symbols transmitted over the $k^{th}$ sub-carrier of the $l^{th}$ OFDM symbol in the $m^{th}$ transmission frame of the $i^{th}$ path differential-modulation symbol sequence; $K$ indicates the number of OFDM valid sub-carriers corresponding to each path of symbol sequences, $\Delta f$ its the central frequency interval between the sub-carriers corresponding to two neighboring paths of differential modulation symbols, and $T_u$ is the reciprocal of the sub-carrier interval.

$\Delta f$ is set in a way that all transmission sub-carriers can remain orthogonal.

DESCRIPTION OF THE DRAWING

Fig. 1 is a schematic diagram showing an OFDM transmitting system in the prior art;
Fig. 2 is a schematic diagram showing an embodiment of a multiplexing device proposed in the present invention;
Fig. 3a is a structural diagram showing a sending end for a T-MMB system;
Fig. 3b is a structural diagram showing a signal unit transmission frame generating module of a sending end for a T-MMB system;
Fig. 4 is a schematic diagram showing another embodiment of a multiplexing device proposed in the present invention;
Fig. 5 is a schematic diagram showing another embodiment of a multiplexing device proposed in the present invention;
Fig. 6 is a flow chart showing an embodiment of a multiplexing method proposed in the present invention.

DETAILED DESCRIPTION OF THE EMBODIMENTS

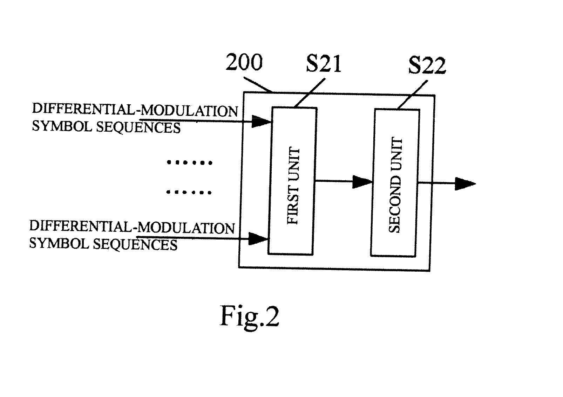

Fig. 2 shows an alternative multiplexing device 200 for an OFDM system, which comprises a first unit S21 and a second unit S22.

The first unit S21 combines and maps N-path differential-modulation symbol sequences to sub-carriers of IFFT, wherein $N$ is an integer larger than 1. The second unit S22 performs IFFT of multiple sub-carriers to realize frequency division multiplexing on multiple paths of differential-modulation symbol sequences.

An alternative manner for combining and mapping $N$-path differential-modulation symbol sequences to sub-carriers of IFFT is:

$$z_{m,l,w} = \begin{cases} z^i_{m,l,k}, & w = \left[i-(N-1)/2\right]\cdot\Delta f\cdot T_u + k; i = 0,1,\ldots,N-1; k = -K/2, -K/2+1,\ldots,K/2-1,K/2 \\ 0, & other \qquad n \end{cases}$$

wherein $z_{m,l,w}$ indicates differential modulation symbols transmitted over the $w^{th}$ sub-carrier of the $l^{th}$ OFDM symbol in the $m^{th}$ transmission frame; $z^i_{m,l,k}$ indicates differential modulation symbols transmitted over the $k^{th}$ sub-carrier of the $l^{th}$ OFDM symbol in the $m^{th}$ transmission frame of the $i^{th}$ path differential-modulation symbol sequence; $K$ indicates the number of OFDM valid sub-carriers corresponding to each path of symbol sequences, $\Delta f$ is the frequency interval between two neighboring frequency points, and $T_u$ is the reciprocal of the sub-carrier interval. The frequency point in this context refers to the central frequency of the OFDM valid sub-carrier corresponding to each path of differential modulation symbols.

As an alternative manner for setting $\Delta f$, $\Delta f$ is set in a manner that all the transmitted sub-carriers can remain orthogonal. For example, $\Delta f$ can be set according to $\Delta f = B + \Delta s \times n$, wherein $B$ is the effective bandwidth occupied by the difieiential-modulation symbol sequences, $\Delta s$ indicates the frequency interval between two neighboring sub-carriers, and n = 1, 2, 3.... It can be seen that the smaller n is, the higher the utilization of the frequency band is. When n = 1, the highest utilization of the frequency band is realized.

After the first unit S21 combines and maps *N*-path differential-modulation symbol sequences to sub-carriers of IFFY, the second unit S22 performs $\underset{w}{ifft}\left(z_{m,l,w}\right)$ to accomplish IFFT of multiple sub-carriers.

Once the second unit S22 performs IFFT of multiple sub-carriers, it is realized to frequency division multiplex multiple paths of differential-modulation symbol sequences.

The multiplexing device 200 shown in Fig. 2 can be applied to a Digital Audio Broadcast (DAB) system or a Terrestrial Digital Mobile Broadcasting (T-DMB) system, and can also be applied to a Terrestrial Mobile Multimedia Broadcasting (T-MMB) system. Hereinafter, reference is made to the case in which the multiplexing device 200 is implemented in a T-MMB system.

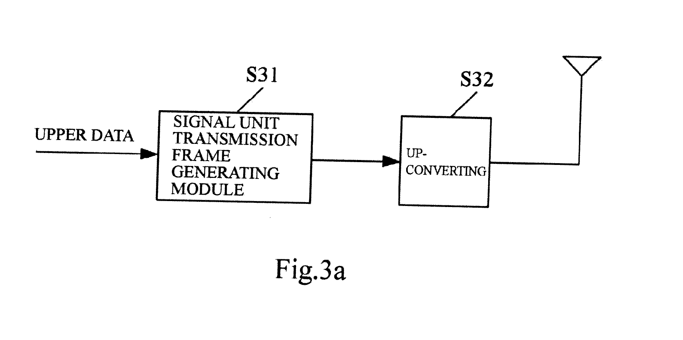

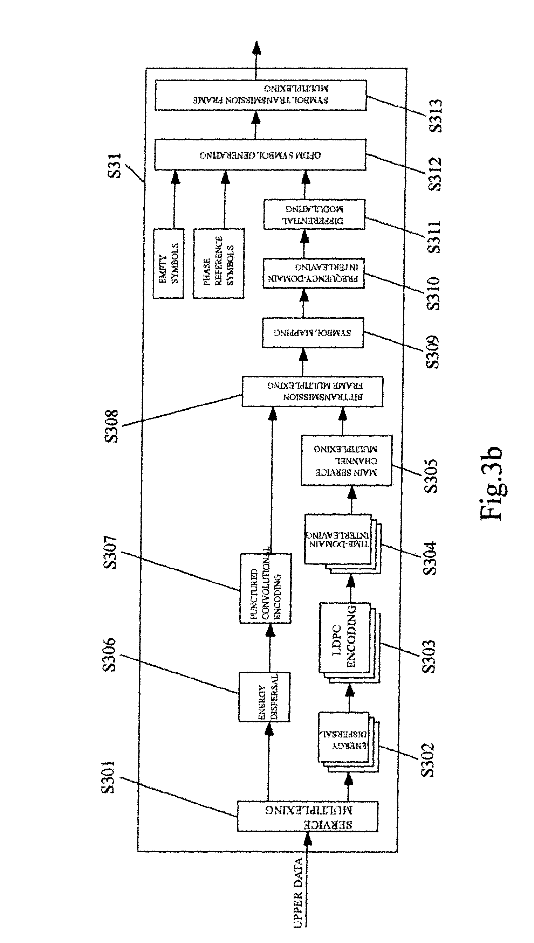

Fig. 3a shows a structure of a sending end for a T-MMB system, and Fig. 3b shows a structure of a signal unit transmission frame generating module S31 of a sending end for a T-MMB system. The signal unit transmission frame generating module S31 comprises a service multiplexing unit S301, a plurality of first energy dispersal units S302, a plurality of Low Density Parity Check (LDPC) encoding units S303, a plurality of time-domain interleaving units S304, a main service channel multiplexing unit S305, a second energy dispersal unit S306, a punctured convolutional encoding unit S307, a bit transmission frame multiplexing unit S308, a symbol mapping unit S309, a frequency-domain interleaving unit S310, a differential modulating unit S311, an OFDM symbol generating unit S312, and a symbol transmission frame multiplexing unit S313.

The service multiplexing unit S301 multiplexes the upper data to obtain service data and the configuration information thereof. The first energy dispersal unit S302, the LDPC encoding unit S303, and the time-domain interleaving unit S304 are connected in series successively, to perform energy dispersal, LDPC encoding, and time-domain interleaving on the service data in one path of sub-channel. The main service channel multiplexing unit S305 composes the data bits output by respective time-domain interleaving unit S304 into a Common Interleave Frame (CIF), and then multiplexes the resultant CIF,

The second energy dispersal unit S306 and the punctured convolutional encoding unit S307 are connected in series, to perform energy dispersal and punctured convolutional encoding on the configuration information data obtained by the service multiplexing unit S301.

The bit transmission frame multiplexing unit S308 performs bit transmission frame multiplexing on the data encoded by the punctured convolutional encoding unit S307 and the CIF. The symbol mapping unit S309, the frequency-domain interleaving unit S310, and the differential modulating unit S311 performs symbol mapping, interleaving in frequency-domain, and differential modulation respectively on the bit stream of the resultant bit transmission frame. The OFDM symbol generating unit S312 generates respective OFDM symbols by using the differential-modulation symbol sequences obtained by the differential modulating unit S311 along with the phase reference symbols and the empty symbols. The symbol transmission frame multiplexing unit S313 multiplexes the continuous OFDM symbols generated by the OFDM symbol generating unit S312 into signal unit transmission frames.

The T-MMB system can operate in two operation modes, namely a first operation mode of 1.7 MHz and a second operation mode of 8 MHz. In the operation mode of 8 MHz, the multiple paths of differential-modulation symbol sequences can be sent by frequency division multiplexing at the sending end by means of the multiplexing device 200.

In the operation mode of 8 MHz, the effective bandwidth occupied by each path of differential-modulation symbol sequences is 1.536 MHz, namely, $B$ = 1.536 MHz. There are several operation modes in the T-MMB system, each of which has its corresponding sub-carrier interval $\Delta s$. The frequency interval $\Delta f$ between two neighboring frequency points can be set according to the maximum sub-carrier interval of 8 kHz, namely, $\Delta f$ = 1.536 MHz + 8 kHz $\times$ n, so that all the sub-carriers in respective operation mode can remain orthogonal. In order to improve the utilization of the frequency band as much as possible, one can set that $\Delta f$ = 1.536 MHz + 8 kHz = 1.544 MHz. Up to five paths of differential-modulation symbol sequences can be frequency division multiplexed according to $\Delta f$ = 1.544 MHz within a channel bandwidth of 8 MHz.

The first unit S21 combines and maps each path of symbol sequences to sub-carriers of IFFT according to $\Delta f$ = 1.544 MHz, and the second unit S22 performs IFFT of multiple sub-carriers.

In the T-MMB system, in order to send the multiplexed multi-path signals, it is also necessary to insert a guard interval (GI) between the symbol sequences on which the IFFT has been performed, and then insert an empty symbol prior to each transmission frame. The multi-path signals are sent after D/A converting and up-converting.

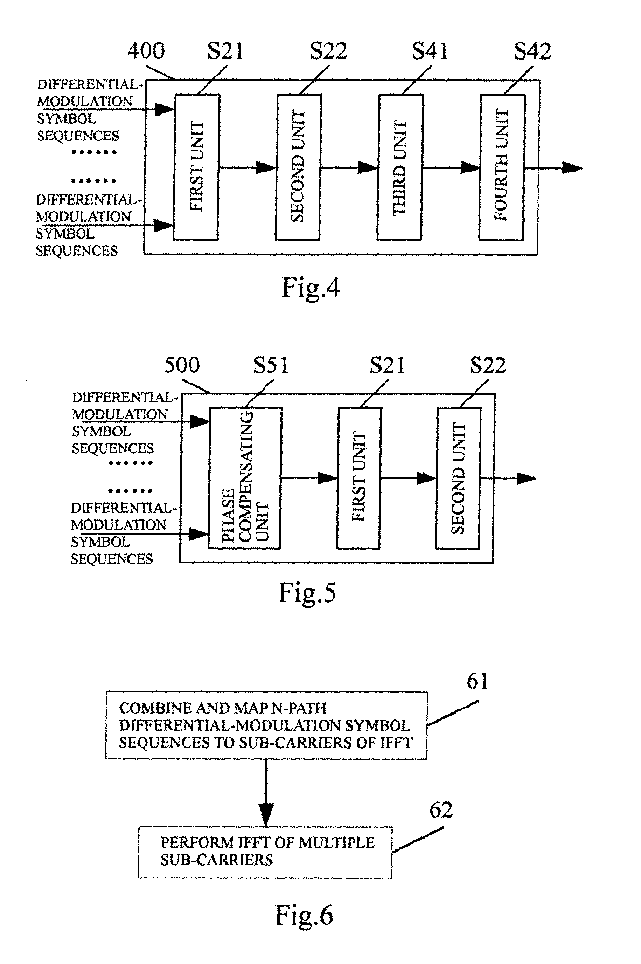

Fig. 4 shows another alternative multiplexing device 400 for an OFDM system. Compared with the device 200, a third unit S41 for inserting a guard interval between the symbol sequences on which the IFFT has been performed, and a fourth unit S42 for inserting an empty symbol prior to each transmission frame, are added in the device 400.

As can be seen, a complete multi-path signals multiplexing transmission system can be obtained if connecting the device 400, a D/A converter, and an up-converter in series.

In the DAB system, the effective bandwidth occupied by one path of differential-modulation symbol sequences is also 1.536 MHz. Similarly, the DAB system can also be modified to operate with a channel bandwidth of 8 MHz. Five paths of differential-modulation symbol sequences are frequency division multiplexed by means of the multiplexing device 200 or the multiplexing device 400 according to $\Delta f = 1.544$ MHz within a channel bandwidth of 8 MHz, and then are transmitted.

In addition, as described above, the T-MMB system can operate in two operation modes, namely a first operation mode of 1.7 MHz and a second operation mode of 8 MHz. In the operation mode of 1.7 MHz, the sending end only sends one path of signals, while in the operation mode of 8 MHz, it is necessary for the sending end to send the multipath signals by frequency division multiplexing. Accordingly, the receiving end should receive the signals in two different ways, which not only increases the complexity of the receiving end, but also increases power consumption of the receiving end. In order to enable the receiving end to receive in the same way the signals sent by the sending end in different ways and thus decrease the complexity and power consumption of the receiving end, a phase compensating unit may be added prior to the first unit, as shown in Fig. 5.

The phase compensating unit S51 performs phase compensation on the *N*-path differential-modulation symbol sequences, respectively. The phase compensating unit S51 sends the phase-compensated *N*-path symbol sequences to the first unit S21. The phase compensating unit S51 can perform phase compensation on each path of differential-modulation symbol sequences, respectively, according to the frequency point at which each path of differential-modulation symbol sequences is located.

Alternatively, the phase compensating unit S51 performs phase compensation on each path of differential-modulation symbol sequences in the following manner:

$$\xi^i_{m,l,k} = z^i_{m,l,k} \times e^{j2\pi(i-2)\Delta f \cdot \Delta} ,$$

wherein $\xi^i_{m,l,k}$ indicates the symbol sequences on which the phase compensation has been performed; i = 0, 1, 2, ...N-1; and $\Delta$ is the length of a guard interval (GI).

In case that the phase compensating unit S51 is added, the first unit S21 combines and maps *N*-path phase-compensated symbol sequences to sub-carriers of IFFT in the following manner:

$$z_{m,l,w} = \begin{cases} \xi^i_{m,l,k}, & w = [i - (N-1)/2] \cdot \Delta f \cdot T_u + k; i = 0,1,\ldots,N-1; k = -K/2, -K/2+1,\ldots,K/2-1,K/2 \\ 0, & other \quad n \end{cases}$$

After the first unit S21 combines and maps *N*-path phase-compensated symbol sequences to sub-carriers of IFFT, the second unit S22 performs $\underset{i}{ifft}\left(z_{m,l,w}\right)$ to accomplish IFFT of multiple sub-carriers and frequency division multiplexing on multiple paths of differential-modulation symbol sequences.

In the T-MMB system, one path of service data is only sent within a fixed small frequency band. Therefore, in the operation mode of 8 MHz, after the sending end performs phase compensation on each path of differential-modulation symbol sequences respectively, the receiving end can receive, at a certain fixed small frequency band in the same way as that in the operation mode of 1.7 MHz, the associated service data sent by the sending end in the operation mode of 8 MHz, and thus the receiving compatibility is realized. Since the receiving end can compatibly receiver the signals sent by the sending end in the operation mode of 1.7 MHz or 8 MHz by using a receiver in the 1.7 MHz system, and both the complexity and the power consumption of the receiver in the 1.7 MHz, system are lower than that of the receiver in the 8 MHz., the complexity and power consumption of the receiving end is decreased, and the user's demand for receiving programs from two systems by a single receiver is met to effectively save the user's cost.

As can be seen, this device can not only be applied to the T-MMB system but can also to the DAB system. If it is required in the future that the DAB system should be capable of operating in a channel bandwidth of 8 MHz, the object of decreasing the complexity and power consumption and receiving programs from two systems by a single receiver can also be realized by applying this device to the DAB systems.

Fig. 6 shows an alternative multiplexing method for an OFDM system.

In step 61, $N$-path differential-modulation symbol sequences are combined and mapped to sub-carriers of IFFT.

In step 62, IFFT of multiple sub-carriers is performed. Once the IFFT of multiple sub-carriers is performed, it is realized to frequency division multiplex the multiple paths of differential-modulation symbol sequences.

An alternative manner for combining and mapping $N$-path differential-modulation symbol sequences to sub-carriers of IFFT is:

$$z_{m,l,w} = \begin{cases} z_{m,l,w}^i, & w = [i-(N-1)/2] \cdot \Delta f \cdot T_u + k; i = 0,1,\ldots,N-1; k = -K/2, -K/2+1,\ldots,K/2-1,K/2 \\ 0, & other \quad n \end{cases}$$

After $N$-path differential-modulation symbol sequences are combined and mapped to sub-carriers of IFFT, $ifft_w(z_{m,l,w})$ is performed to accomplish IFFT of multiple sub-carriers.

The above method can not only be applied to the DAB system but can also to the T-MMB system. Hereinafter, reference is made to the case in which the method is implemented in the T-MMB system.

The T-MMB system can operate in two operation modes, namely a first operation mode of 1.7 MHz and a second operation mode of 8 MHz. In the operation mode of 8 MHz, the multiple paths of differential-modulation symbol sequences can be sent by frequency division multiplexing at the sending end by means of the method.

In the operation mode of 8 MHz, the effective bandwidth occupied by each path of differential-modulation symbol sequences is 1.536 MHz, namely, $B$ = 1.536 MHz. There are several operation modes in the T-MMB system, each of which has its corresponding sub-carrier interval $\Delta s$. The frequency interval $\Delta f$ between two neighboring frequency points can be set according to the maximum sub-carrier interval of 8 kHz, namely, $\Delta f$ = 1.536 MHz + 8 MHz × n. so that the sub-carriers in respective operation mode can remain orthogonal. In order to improve the utilization of frequency band as much as possible, one can set that $\Delta f$ = 1.536 MHz + 8 kHz, = 1.544 MHz. Up to five paths of differential-modulation symbol sequences can be frequency division multiplexed according to $\Delta f$ = 1.544 MHz within a channel bandwidth of 8 MHz.

Each path of symbol sequences is combined and mapped to sub-carriers of IFFT according to $\Delta f$ = 1.544 MHz, and then IFFT of multiple sub-carriers is performed.

In the T-MMB system, in order to send the multiplexed multi-path signals, it is also necessary to insert a guard interval (GI) between the symbol sequences on which the IFFT has been performed, and then insert an empty symbol prior to each transmission frame. The multi-path signals are sent after D/A converting and up-converting.

In the DAB system, the effective bandwidth occupied by one path of differential-modulation symbol sequences is also 1.536 MHz. Similarly, the DAB system can also be modified to operate in the operation mode of 8 MHz. By means of the method described above, five paths of differential-modulation symbol sequences are frequency division multiplexed according to $\Delta f$ = 1.544 MHz within a channel bandwidth of 8 MHz, and then are transmitted.

In addition, as described above, the T-MMB system can operate in two operation modes, namely a first operation mode of 1.7 MHz and a second operation mode of 8 MHz. In the operation mode of 1.7 MHz, the sending end only sends one path of signals, while in the operation mode of 8 MHz, it is necessary for the sending end to send the multi-path signals by frequency division multiplexing. Accordingly, the receiving end should receive the signals in two different ways, which not only increases the complexity of the receiving end, but also increases power consumption of the receiving end. In order to enable the receiving end to receive in the same way the signals sent by the sending end in different ways and thus decrease the complexity and power consumption of the receiving end, phase compensation may be performed on each path of differential-modulation symbol sequences, respectively, prior to combining and mapping each path of differential-modulation symbol sequences.

Phase compensation may be performed on each path of differential-modulation symbol sequences, respectively, according to the frequency point at which each path of differential-modulation symbol sequences is located. Alternatively, phase compensation is performed on each path of differential-modulation symbol sequences in the following manner:

$$\xi_{m,l,k}^i = z_{m,l,k}^i \times e^{j2\pi(i-2)\Delta f \cdot \Delta} .$$

After phase compensation is performed on each path of differential-modulation symbol sequences respectively, *N*-path phase-compensated symbol sequences are combined and mapped to sub-carriers of IFFT in the following manner:

$$z_{m,l,w} = \begin{cases} \xi^i_{m,l,k}, & w = [i - (N-1)/2] \cdot \Delta f \cdot T_u + k; i = 0,1,\ldots,N-1; k = -K/2, -K/2+1,\ldots,K/2-1,K/2 \\ 0, & other \qquad n \end{cases}$$

Then, $iﬀt\left(z_{m,l,w}\right)$ is performed to accomplish IFFT of multiple sub-carriers and frequency division multiplexing on multiple paths of differential-modulation symbol sequences.

In the T-MMB system, one path of service data is only sent within a fixed small frequency band. Therefore, in the operation mode of 8 MHz, after the sending end performs phase compensation on each path of differential-modulation symbol sequences respectively, the receiving end can receive, at a certain fixed small frequency band in the same way as that in the operation mode of 1.7 MHz, the associated service data sent by the sending end in the operation mode of 8 MHz, and thus the receiving compatibility is realized. Since the receiving end can compatibly receive the signals sent by the sending end in the operation mode of 1.7 MHz or 8 MHz by using a receiver in the 1.7 MHz system, and both the complexity and the power consumption of the receiver in the 1.7 MHz system are lower than that of the receiver in the 8 MHz system, the complexity and power consumption of the receiving end are decreased, and the user's demand for receiving programs from two systems by a single receiver is met to effectively save the user's cost.

As can be seen, the method described above can not only be applied to the T-MMB system but can also to the DAB system. If it is required in the future that the DAB system should be capable of operating in a channel bandwidth of 8 MHz, the object of decreasing the complexity and power consumption and receiving programs from two systems by a single receiver can also be realized by applying this device to the DAB system.

The present invention further provides an integrated circuit for implementing the device or method described in any of the above embodiments.

The present invention further provides a computer readable medium for storing programs which are used to implement the method described in any of the above embodiments.

It will be appreciated for the person skilled in the art that various exemplary steps of method and units of device described herein with reference to the disclosed embodiments can be implemented by the electronic hardware, software, or the combination thereof. To clearly show the interchangeability between hardware and software, a general description has been made to the various exemplary steps and units in a form of their functionality. Whether this functionality is implemented by hardware or software depends on the specific application and the design constraints realized by the whole system. The person skilled in the art may implement the described functionality in a variety of ways with respect to each specific application, but it should not be construed that this implementation departs from the scope of the present invention.

The exemplary units described in the embodiments disclosed herein can be implemented or fulfilled by means of a general purpose processor, a digital signal processor (DSP), an application specific integrated circuit (ASIC), a field programmable gate array (FPGA) or other programmable logic devices, a discrete gate or transistor logic, a discrete hardware assembly, or any combination thereof. The general purpose processor can be a microprocessor, but in another case the processor can be any conventional processor, controller, microcontroller, or state machine. The processor can also be implemented as a combination of computing devices, for example, the combination of DSP and microprocessor, a plurality of microprocessors, one or more microprocessors incorporating the DSP core, or any other structures of this kind.

The steps of method described in the embodiments described hereinabove can be directly implemented by hardware, a software module executed by a processor, or the combination thereof. The software module can be stored in a RAM memory, a flash memory, a ROM memory, an EPROM memory, an EEPROM memory, a register, a hard disk, a removable disk, a CD-ROM, or any other kinds of storage media known in the art. A typical storage medium is coupled with the processor so that the processor is capable of reading information from the storage medium and writhing information to the storage medium. In an alternative example, the storage medium is an integral part of the processor. The processor and the storage medium may reside in an ASIC, The ASIC may reside in a user station. In an alternative example, the processor and the storage medium can be a separate component in the user station.

According to the disclosed embodiment, the person skilled in the art is enabled to implement or carry out the present invention. As for the person skilled in the art, various modifications to these embodiments are apparent, and the general principles defined herein can also be applied to other embodiments without departing from the scope and gist of the present invention. The embodiments described above are only the preferred embodiments of the present invention, and do not limit the present invention in any way. All of the modifications, equivalents, improvements or the like within the spirit and principle of the present invention should fall within the protection scope of the present invention.

**Claims**

1. A multiplexing device for an OFDM system, **characterized in that** the device comprises:

   - a first unit for combining and mapping $N$-path differential-modulation symbol sequences to sub-carriers of Inverse Fast Fourier Transformation (IFFT), wherein $N$ is an integer larger than 1; and
   - a second unit for performing IFFT of multiple sub-carriers to realize frequency division multiplexing on multiple paths of differential-modulation symbol sequences.

2. A device as claimed in claim 1, **characterized in that** the first unit combines and maps $N$-path differential-modulation symbol sequences to sub-carriers of IFFT according to the following equation:

$$z_{m,l,w} = \begin{cases} z_{m,l,k}^{i}, & w = [i-(N-1)/2] \cdot \Delta f \cdot T_u + k; i = 0,1,\ldots,N-1; k = -K/2, -K/2+1,\ldots,K/2-1, K/2 \\ 0, & other \quad n \end{cases}$$

wherein $z_{m,l,w}$ indicates differential modulation symbols transmitted over the $w^{th}$ sub-carrier of the $l^{th}$ OFDM symbol in the $m^{th}$ transmission frame; $z_{m,l,k}^{i}$ indicates differential modulation symbols transmitted over the $k^{th}$ sub-carrier of the $l^{th}$ OFDM symbol in the $m^{th}$ transmission frame of the $i^{th}$ path differential-modulation symbol sequence; $K$ indicates the number of OFDM valid sub-carriers corresponding to each path of symbol sequences, $\Delta f$ is a central frequency interval between the sub-carriers corresponding to two neighboring paths of differential modulation symbols, and $T_u$ is a reciprocal of the sub-carrier interval.

3. A device as claimed in claim 1, **characterized in that** further comprising: a phase compensating unit for performing phase compensation on $N$-path differential-modulation symbol sequences, respectively, and sending phase-compensated $N$-path symbol sequences to the first unit.

4. A device as claimed in claim 3, **characterized in that** the phase compensating unit performs phase compensation on each path of differential-modulation symbol sequences respectively, according to the frequency point at which each path of differential-modulation symbol sequences is located.

5. A device as claimed in claim 4, **characterized in that** the phase compensating unit performs phase compensation on each path of differential-modulation symbol sequences by calculating $\xi_{m,l,k}^{i} = z_{m,l,k}^{i} \times e^{j2\pi(i-2)\Delta f \cdot \Delta}$ to obtain a phase-compensated symbol sequence $\xi_{m,l,k}^{i}$;

   wherein $z_{m,l,k}^{i}$ indicates differential modulation symbols transmitted over the $k^{th}$ sub-carrier of the $l^{th}$ OFDM symbol in the $m^{th}$ transmission frame of the $i^{th}$ path differential-modulation symbol sequence, $i = 0, 1, 2, ...N-1$;
   $\Delta f$ is a central frequency interval between the sub-carriers corresponding to two neighboring paths of differential modulation symbols, and $\Delta$ is a length of a guard interval.

6. A device as claimed in claim 5, **characterized in that** the first unit combines and maps $N$-path phase-compensated symbol sequences to sub-carriers of IFFT according to the following equation:

$$z_{m,l,w} = \begin{cases} \xi_{m,l,w}^{i}, & w = [i-(N-1)/2] \cdot \Delta f \cdot T_u + k; i = 0,1,\ldots,N-1; k = -K/2, -K/2+1,\ldots,K/2-1, K/2 \\ 0, & other \quad n \end{cases}$$

wherein $z_{m,l,w}$ indicates phase-compensated differential modulation symbols transmitted over the $w^{th}$ sub-carrier of the $l^{th}$ OFDM symbol in the $m^{th}$ transmission frame, $K$ indicates the number of OFDM valid sub-carriers corresponding to each path of symbol sequences, and $T_u$ is a reciprocal of sub-carrier interval.

7. A device as claimed in claims 2, 5, or 6, **characterized in that** $\Delta f$ is set in a way that all transmission sub-carriers can remain orthogonal.

8. A device as claimed in claim 7, **characterized in that** $\Delta f = B + \Delta s \times$ n;
wherein $B$ is the effective bandwidth occupied by each path of the differential-modulation symbol sequences, $\Delta s$ indicates frequency interval between two neighboring sub-carriers, and n = 1, 2, 3....

9. A device as claimed in claim 8, **characterized in that** n = 1.

10. A device as claimed in claim 9, **characterized in that** $N$ = 5.

11. A device as claimed in claim 1, **characterized in that** the effective bandwidth $B$ occupied by each path of differential-modulation symbol sequences is 1.536 MHz.

12. A device as claimed in claim 1, **characterized in that** the frequency interval $\Delta s$ between two neighboring sub-carriers is 1 kHz, 2 kHz, 4 kHz, or 8 kHz.

13. A multiplexing method for an OFDM system, **characterized in that** the method comprises the steps of:

- combining and mapping $N$-path differential-modulation symbol sequences to sub-carriers of Inverse Fast Fourier Transformation (IFFT);
- performing IFFT of multiple sub-carriers to realize frequency division multiplexing on multiple paths of differential-modulation symbol sequences.

14. A method as claimed in claim 13, **characterized in that** $N$-path differential-modulation symbol sequences are combined and mapped to sub-carriers of IFFT according to the following equation:

$$z_{m,l,w} = \begin{cases} z^i_{m,l,k}, & w = [i-(N-1)/2] \cdot \Delta f \cdot T_u + k; i = 0,1,\ldots,N-1; k = -K/2, -K/2+1,\ldots,K/2-1,K/2 \\ 0, & other \qquad n \end{cases}$$

wherein $z_{m,l,w}$ indicates differential modulation symbols transmitted over the $w$th sub-carrier of the $l$th OFDM symbol in the $m$th transmission frame; $z^i_{m,l,k}$ indicates differential modulation symbols transmitted over the $k$th sub-carrier of the $l$th OFDM symbol in the $m$th transmission frame of the $i$th path differential-modulation symbol sequence; $K$ indicates the number of OFDM valid sub-carriers corresponding to each path of symbol sequences, $\Delta f$ is a central frequency interval between the sub-carriers corresponding to two neighboring paths of differential modulation symbols, and $T_u$ is a reciprocal of the sub-carrier interval.

15. A method as claimed in claim 13, **characterized in that** further comprising the steps of:

performing phase compensation on $N$-path differential-modulation symbol sequences, respectively;
combining and mapping phase-compensated $N$-path symbol sequences to sub-carriers of IFFT.

16. A method as claimed in claim 15, **characterized in that** the phase compensation is performed on each path of differential-modulation symbol sequences, respectively, according to frequency point at which each path of differential-modulation symbol sequences is located.

17. A method as claimed in claim 16, **characterized in that** the phase compensation is performed on each path of differential-modulation symbol sequences by calculating $\xi^i_{m,l,k} = z^i_{m,l,k} \times e^{j2\pi(i-2)\Delta f \cdot \Delta}$ to obtain a phase-compensated symbol sequence $\xi^i_{m,l,k}$;

wherein $z_{m,l,w}^{i}$ indicates differential modulation symbols transmitted over the $k$th sub-carrier of the $l$th OFDM symbol in the $m$th transmission frame of the $i$th path differential-modulation symbol sequence, $i = 0, 1, 2, ...N$-1; $\Delta f$ is the central frequency interval between the sub-carriers corresponding to two neighboring paths of differential modulation symbols, and $\Delta$ is a length of a guard interval.

18. A method as claimed in claim 17, **characterized in that** $N$-path phase-compensated symbol sequences are combined and mapped to sub-carriers of IFFT according to the following equation:

$$z_{m,l,w} = \begin{cases} \xi_{m,l,k}^{i}, & w = \left[i-(N-1)/2\right]\cdot\Delta f\cdot T_{u} + k; i = 0,1,\ldots,N-1; k = -K/2, -K/2+1, \ldots, K/2-1, K/2 \\ 0, & other \quad n \end{cases}$$

wherein $z_{m,l,w}$ indicates phase-compensated differential modulation symbols transmitted over the $w$th sub-carrier of the $l$th OFDM symbol in the $m$th transmission frame, $K$ indicates the number of OFDM valid sub-carriers corresponding to each path of symbol sequences, and $T_{u}$ is the reciprocal of sub-carrier interval.

19. A method as claimed in claims 14, 17, or 18, **characterized in that** $\Delta f$ is set in a way that all transmission sub-carriers can remain orthogonal.

20. A method as claimed in claim 19, **characterized in that** $\Delta f = B + \Delta s \times$ n; wherein $B$ is the effective bandwidth occupied by the differential-modulation symbol sequences, $\Delta s$ indicates the frequency interval between two neighboring sub-carriers, and n = 1, 2, 3....

21. A method as claimed in claim 20, **characterized in that** n = 1.

22. A method as claimed in claim 21, **characterized in that** $N$ = 5.

23. A method as claimed in claim 13, **characterized in that** the effective bandwidth $B$ occupied by each path of differential-modulation symbol sequences is 1,536 MHz.

24. A method as claimed in claim 13, **characterized in that** the frequency interval $\Delta s$ between two neighboring sub-carriers is 1 kHz, 2 kHz, 4 kHz, or 8 kHz.

Fig.1

Fig.2

S31

S32

UPPER DATA →

SIGNAL UNIT
TRANSMISSION
FRAME
GENERATING
MODULE

→

UP-
CONVERTING

Fig.3a

Fig.3b

SERVICE MULTIPLEXING — S301

UPPER DATA

ENERGY DISPERSAL — S302

LDPC ENCODING — S303

TIME-DOMAIN INTERLEAVING — S304

MAIN SERVICE CHANNEL MULTIPLEXING — S305

ENERGY DISPERSAL — S306

PUNCTURED CONVOLUTIONAL ENCODING — S307

BIT TRANSMISSION FRAME MULTIPLEXING — S308

SYMBOL MAPPING — S309

FREQUENCY-DOMAIN INTERLEAVING — S310

DIFFERENTIAL MODULATING — S311

OFDM SYMBOL GENERATING — S312

SYMBOL TRANSMISSION FRAME MULTIPLEXING — S313

EMPTY SYMBOLS

PHASE REFERENCE SYMBOLS

S31

400   S21        S22        S41        S42

DIFFERENTIAL-
MODULATION
SYMBOL
SEQUENCES
· · · · · ·
· · · · · ·
DIFFERENTIAL-
MODULATION
SYMBOL
SEQUENCES

FIRST UNIT → SECOND UNIT → THIRD UNIT → FOURTH UNIT →

Fig.4

500      S51        S21        S22

DIFFERENTIAL-
MODULATION
SYMBOL
SEQUENCES
· · · · · ·
· · · · · ·
DIFFERENTIAL-
MODULATION
SYMBOL
SEQUENCES

PHASE COMPENSATING UNIT → FIRST UNIT → SECOND UNIT →

Fig.5

COMBINE AND MAP N-PATH
DIFFERENTIAL-MODULATION SYMBOL
SEQUENCES TO SUB-CARRIERS OF IFFT     61

↓

PERFORM IFFT OF MULTIPLE
SUB-CARRIERS                          62

Fig.6

# INTERNATIONAL SEARCH REPORT

| | International application No. |
|---|---|
| | PCT/CN2009/072461 |

**A. CLASSIFICATION OF SUBJECT MATTER**

H04L27/26 (2006.01)i

According to International Patent Classification (IPC) or to both national classification and IPC

**B. FIELDS SEARCHED**

Minimum documentation searched (classification system followed by classification symbols)

IPC: H04L27/-, H04J11/-, H04B7/-

Documentation searched other than minimum documentation to the extent that such documents are included in the fields searched

Electronic data base consulted during the international search (name of data base and, where practicable, search terms used)

WPI, EPODOC, PAJ, CNPAT, CNKI: OFDM, multi-path, multiplex, differential, modulation, symbol, mapping, Fourier

**C. DOCUMENTS CONSIDERED TO BE RELEVANT**

| Category* | Citation of document, with indication, where appropriate, of the relevant passages | Relevant to claim No. |
|---|---|---|
| X | CN1606298A (UNIVERSITY SOUTHEAST) 13 Apr. 2005 (13.04.2005) description, page 2 lines 1-12, page 3 lines 1-18, page 5 line 3 - page 8 line 2, figures 1-4 | 1, 3, 4, 13, 15, 16 |
| A | Ditto | 2, 5-12, 14, 17-24 |
| PX | CN101340415A (BEIJING NEW SHORELINE MOBILE MULTIMEDIA TECH CO., LTD.) 07 Jan. 2009 (07.01.2009) Claims 1-24 | 1-24 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 08 Sep. 2009 (08.09.2009) | **01 Oct. 2009 (01.10.2009)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 | ZHANG，Xiaohui |
| Facsimile No. 86-10-62019451 | Telephone No. (86-10)62411322 |

Form PCT/ISA/210 (second sheet) (April 2007)

## INTERNATIONAL SEARCH REPORT
Information on patent family members

| International application No. |
| --- |
| PCT/CN2009/072461 |

| Patent Documents referred in the Report | Publication Date | Patent Family | Publication Date |
| --- | --- | --- | --- |
| CN1606298A | 13.04.2005 | CN100359895C | 02.01.2008 |
| CN101340415A | 07.01.2009 | None | |

Form PCT/ISA/210 (patent family annex) (April 2007)